# EUROPÄISCHE PATENTSCHRIFT

(11) **EP 1 049 896 B1**
(45) Veröffentlichungstag und Bekanntmachung des Hinweises auf die Patenterteilung: **27.03.2002**
(21) Anmeldenummer: 99903622.1
(22) Anmeldetag: 12.01.1999
(51) Int. Cl.: F16L 19/02, F17C 13/04

(54) **ANSCHLUSSSTUTZEN MIT DICHTWULST**
CONNECTING BRANCH WITH A SEALING BEAD
TUBULURE DE RACCORDEMENT A BOURRELET D'ETANCHEITE

(30) Priorität: 21.01.1998 LU 90201
(43) Veröffentlichungstag der Anmeldung: 08.11.2000
(73) Patentinhaber: Ceodeux Ultra Pure Equipment Technology S.A., 7505 Lintgen (LU)
(72) Erfinder: KREMER, Paul, L-7263 Walferdange (LU)
(74) Vertreter: Schmitt, Armand
(86) Internationale Anmeldenummer: EP9900129
(87) Internationale Veröffentlichungsnummer: WO9937946

(56) Entgegenhaltungen:
- DE-B- 1 247 088
- GB-A- 1 521 546
- US-A- 5 192 095
- US-E- R E34 144

## Beschreibung

Die Erfindung betrifft einen Anschlußstutzen mit Dichtwulst.

Aus der Reinstgastechnologie ist ein Ventilanschlußstutzen bekannt, der eine ringförmige Dichtfläche mit einem umlaufenden Dichtwulst aufweist. An diesen Ventilanschlußstutzen ist ein Anschlußnippel ankuppelbar, der ebenfalls eine ringförmige Dichtfläche mit einem umlaufenden Dichtwulst ausweist. Ein Dichtring aus Weichmetall wird zwischen den beiden Dichtflächen angeordnet, so daß beim Ankuppeln des Anschlußnippels an den Anschlußstutzen, die beiden Dichtwülste in die beiden Stirnflächen des Dichtrings eingepreßt werden. Ein solches Kupplungssystem ist von der "Compressed Gas Association, Inc." (USA) unter der Bezeichnung: "Outlet Connections for Ultra High Integrity Service, CGA 630/710 series" genormt (siehe z.B. Datenblätter "Drawing NO. 630"; Ausgabe: CGA V-1 Oktober 1994). Es zeichnet sich durch eine hohe Dichtheit und Zuverlässigkeit aus, und wird deshalb insbesondere bei hochreinen Gasen für die Halbleiterindustrie eingesetzt.

Um bei hoch toxischen, korrosiven oder pyrophoren Gasen jegliches Risiko einer Gasleckage zu verhindern, wird der Dichtwulst einer strengen Kontrolle unterworfen. Weist z.B. ein Dichtwulst an einem Ventilanschluß auch nur leichte Korrosionsspuren, geringe Kratzer oder minimale Beschädigungen auf, welche die Dichtheit beeinträchtigen können, so wird die Abnahme des Ventils verweigert. In den meisten Fällen ist ein Nacharbeiten der genormten Geometrie eines beschädigten Dichtwulstes mit vertretbarem Aufwand nicht möglich, so daß das komplette Ventil ersetzt wird. Bei hochreinen Gasen ist ein Ersetzen des Ventils jedoch kostenintensiv und zeitaufwendig. Der vorliegenden Erfindung liegt die Aufgabe zugrunde, diese Nachteile zu beseitigen oder zumindest zu reduzieren.

Diese Aufgabe wird erfindungsgemäß durch einen Anschlußstutzen mit Dichtwulst nach Anspruch 1 gelöst. Bei diesem Anschlußstutzen wird der Dichtwulst durch ein auswechselbares Einsatzteil ausgebildet, das in eine stirnseitig offene Kammer im Anschlußstutzen abgedichtet eingesetzt ist. Werden bei der Abnahme eines Ventils leichte Korrosionsspuren, Kratzer oder Beschädigungen am Dichtwulst des Anschlußstutzens festgestellt, so wird einfach das Einsatzteil, das den Dichtwulst ausbildet, ausgewechselt. Ein aufwendiges Nacharbeiten des Dichtwulstes am Anschlußstutzen des Ventils entfällt hierdurch. Ein weiterer Vorteil der Erfindung besteht darin, daß das Einsatzteil erst vor Ausliefern des Ventils in den Anschlußstutzen eingesetzt werden kann. . Die Erfindung ermöglicht ebenfalls ein präventives Auswechseln des Dichtwulstes nach einer gewissen Betriebsdauer, bzw. anläßlich bestimmter Interventionen. So ist es zum Beispiel bei einem Flaschenventil ohne weiteres möglich, systematisch nach dem Befüllen der Flasche, ein neues Einsatzteil in den Anschlußstutzen einzusetzen. Es ist weiterhin hervorzuheben, daß der Einsatz der erfindungsgemäßen Anschlußstutzen mit Einsatzteil keine Abänderungen an den Anschlußnippeln erfordert. In anderen Worten, der Einsatz der Erfindung verursacht keine Umrüstkosten beim Endabnehmer.

Da die Abdichtung zwischen Einsatzteil und Anschlußstutzen nicht genormt sein muß, verfügt der Ventilhersteller über eine große Freiheit, diese Abdichtung derart zu gestalten, daß z.B. die Dichtflächen im Anschlußstutzen, nach Herausnahme des Einsatzteils, leicht nacharbeitbar sind. In einer bevorzugten Ausführung erfolgt die Abdichtung zwischen Einsatzteil und Anschlußstutzen durch einen axialen Dichtring, vorzugsweise durch einen metallischen Dichtring. Letzterer liegt mit seiner ersten Stirnfläche an einer ringförmigen, leicht nacharbeitbaren, Kammer-Dichtfläche in der Kammer im Anschlußstutzen an, und mit seiner zweiten Stirnfläche an einer ringförmigen zweiten Dichtfläche am Einsatzteil an, wobei mindestens die erste Stirnfläche des Dichtrings einen Dichtwulst ausbildet. Ein zweiter Dichtwulst kann entweder an der ringförmigen Dichtfläche am Einsatzteil oder, vorzugsweise, an der zweiten Stirnfläche des Dichtrings angeordnet sein.

Der axiale Dichtring ist vorteilhaft in eine stirnseitig offene Dichtringkammer im Einsatzteil eingesetzt, wobei diese Dichtringkammer derart ausgelegt ist. daß sein erster Dichtwulst nicht aus der Dichtringkammer herausragt. Hierdurch ist gewährleistet. daß dieser erste Dichtwulst. vor und während der Montage des Einsatzteils weitgehend gegen Beschädigungen geschützt ist. Die ringförmige Kammer-Dichtfläche wird vorteilhaft von einer Ringnut umgeben, in welche die Wandung der Dichtringkammer eingesetzt ist, so daß diese Kammer-Dichtfläche an dem ersten Dichtwulst des Dichtrings anliegt.

Die Abdichtung zwischen Einsatzteil und Anschlußstutzen wird vorteilhaft durch ein radial wirkendes Abdichtelement zwischen einer rotationssymmetrischen Mantelfläche in der Kammer und einer rotationssymmetrischen Mantelfläche am Einsatzteil ergänzt. Eine solche sekundäre Radial-Abdichtung gewährleistet eine minimale Dichtheit zwischen Einsatzteil und Anschlußstutzen, falls kein Anschlußnippel angekuppelt ist, bzw. falls letzterer nicht fest genug angeschraubt ist, um die Wirksamkeit des axialen Dichtrings zu gewährleisten. Sie umfaßt z.B. einen O-Ring der in eine Ringnut in der Kammer des Anschlußstutzens derart eingebaut ist, daß er abgedichtet an einer zylindrischen Mantelfläche des Einsatzteils anliegt. Alternativ könnte der O-Ring auch in einer Ringnut des Einsatzteils angeordnet sein.

In der Kammer wird das Einsatzteil vorteilhaft mittels mindestens einer Schraube befestigt, wobei diese Schraube in die Kammerwand eingeschraubt ist und quer zur Mittelachse des Anschlußstutzens in die Kammer hineinragt. Hier wirkt sie mit einer abgeschrägten Mantelfläche des Einsatzteils derart zusammen, daß das Einsatzteil, durch die Keilwirkung der abgeschrägten Mantelfläche, in Richtung der Kammeröffnung blockiert wird, in Richtung der Kammer-Dichtfläche jedoch frei beweglich ist.

In einer vorteilhaften Ausgestaltung weist das Einsatzteil, in der Reihenfolge von seinem Ende mit dem ersten Dichtwulst, bis zu seinem gegenüberliegenden Ende, eine erste zylindrische Führungsfläche, eine konisch sich erweiternde Einspannfläche, und eine zylindrische Abdichtfläche auf. Die Kammer ist dann vorteilhaft als abgestufte Bohrung ausgebildet, wobei die zylindrische Führungsfläche in einer ersten Stufe geführt ist, und die zylindrische Abdichtfläche in einer zweiten Stufe durch ein radial wirkendes Dichtelement abgedichtet ist, und wobei der Durchmesser der ersten Stufe größer als der Durchmesser der zweiten Stufe ist.

Es bleibt anzumerken, daß in dem Einsatzteil vorteilhaft ein Durchflußbegrenzer integriert sein kann.

Weitere Vorteile und Merkmale der Erfindung lassen sich aus der nachfolgenden Beschreibung einiger Ausführungsbeispiele ableiten, die anhand der beigefügten Zeichnungen vorgenommen wird.

Es zeigen:
- Figur 1:: einen Längsschnitt durch einen Anschlußstutzen mit angekuppeltem Anschlußnippel;
- Figur 2:: eine perspektivische Ansicht eines erfindungsgemäßen Einsatzteils;
- Figur 3:: einen Längsschnitt durch den Anschlußstutzen der Figur 1 (vergrößert gezeichnet);
- Figur 4:: einen Längsschnitt durch einen Anschlußstutzen wie in Figur 3, jedoch mit einem Durchflußbegrenzer;
- Figur 5:: einen Schnitt durch einen alternativen Dichtring mit Dichtwulsten zwischen zwei Dichtflächen;
- Figur 6 +7:: vergrößerte Details aus der Figur 5;
- Figur 8:: einen Längsschnitt durch einen Anschlußstutzen mit Füllnippel.

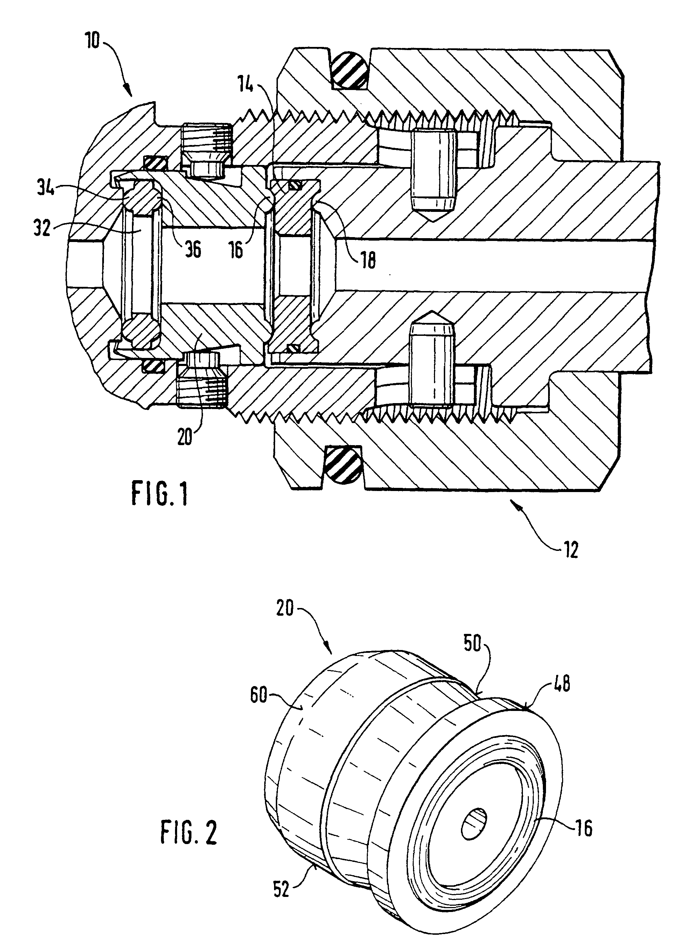

In Figur 1 ist ein Anschlußstutzen 10 eines Gasventils mit aufgeschraubten Anschlußnippel 12 gezeigt. Die gezeigte Verbindung zwischen dem Anschlußstutzen 10 und Anschlußnippel 12, in der die Abdichtung durch einen axialen Dichtring 14 aus Weichmetall (bzw. einer Legierung) erfolgt, ist von der "Compressed Gas Association, Inc." (USA) unter der Bezeichnung: "Outlet Connections for Ultra High Integrity Service, CGA 630/710 series" genormt. Der Dichtring 14 wird hierbei zwischen zwei Dichtflächen zusammengepreßt, wobei jede der Dichtflächen einen Dichtwulst 16, 18 aufweist, der in den Dichtring 14 aus Weichmetall eingedrückt wird. Hierdurch wird, wie bereits eingangs erwähnt, eine ausgezeichnete Dichtheit erzielt, so daß dieses Abdichtsystem besonders für hoch toxische, korrosive oder pyrophore Gase geeignet ist.

Entsprechend dem Stand der Technik, wird der Dichtwulst 16, dessen Geometrie durch die "Compressed Gas Association, Inc." genau festgelegt ist, in einer stirnseitig offenen Kammer im Anschlußstutzen in eine ringförmige Schulterfläche eingearbeitet.

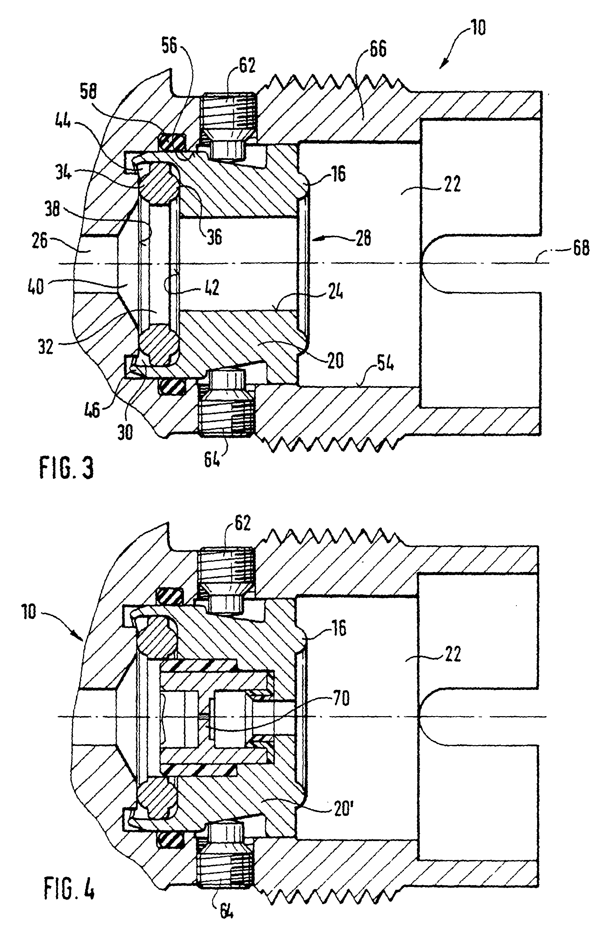

Entsprechend der vorliegenden Erfindung wird die ringförmige Dichtfläche mit dem Dichtwulst 16 durch ein auswechselbares Einsatzteil 20 ausgebildet. Wie am besten aus Figur 3 ersichtlich, ist dieses Einsatzteil 20 in eine stirnseitig offene Kammer 22 im Anschlußstutzen 10 abgedichtet eingesetzt. Es besteht im wesentlichen aus einem Rotationskörper (siehe auch Figur 2) mit einer Durchbohrung 24 in axialer Verlängerung eines Kanals 26 im Anschlußstutzen 10. In der ersten Stirnseite 28 dieses Rotationskörpers ist der Dichtwulst 16 eingearbeitet. Am gegenüberliegenden Ende weist das gezeigte Einsatzteil 10 eine Dichtringkammer 30 auf, in der ein metallischer Dichtring 32 angeordnet ist. Dieser metallische Dichtring 32 weist an seinen beiden Stirnflächen jeweils einen Dichtwulst 34, 36 auf. Der erste Dichtwulst 34 liegt an einer ebenen Dichtfläche 38 am Ende der Kammer 22 an, wobei er eine Einmündung 40 des Kanals 26 in die Kammer 22 ringförmig umgibt. (Diese Dichtfläche 38 wird nachfolgend als "Kammer-Dichtfläche" 38 bezeichnet). Der zweite Dichtwulst 36 liegt an einer ebenen Dichtfläche 42 am Ende der Dichtringkammer 30 an, wobei er die Einmündung des Kanals 24 ringförmig umgibt. (Diese Dichtfläche 42 wird nachfolgend als "zweite Dichtfläche" 38 am Einsatzteil 20 bezeichnet). Es wird darauf hingewiesen, daß die Dichtringkammer 30 derart ausgelegt ist, daß der erste Dichtwulst 34 des metallischen Dichtrings 32 nicht aus der Dichtringkammer 30 herausragt. Hierdurch ist gewährleistet, daß dieser erste Dichtwulst 34 vor und während der Montage des Einsatzteils weitgehend gegen Beschädigungen geschützt ist. Bei dieser Ausführung wird die ringförmige Kammer-Dichtfläche 38 von einer Ringnut 44 umgeben, in welche die zylindrische Wandung 46 der Dichtringkammer 30 eingeführt ist, so daß die Kammer-Dichtfläche 38 an den versenkt liegenden ersten Dichtwulst 34 anpreßbar ist.

Wie insbesondere aus Figur 2 ersichtlich, weist das Einsatzteil 20, in Reihenfolge von seinem Ende mit dem ersten Dichtwulst 16, bis zu seinem gegenüberliegen Ende (in dem die Dichtringkammer 30 angeordnet ist), eine erste zylindrische Führungsfläche 48, eine konisch sich nach hinten erweiternde Einspannfläche 50 und eine zylindrische Abdichtfläche 52 auf. Die Kammer 22, in den dieses Einsatzteil 20 eingesetzt wird, ist als abgestufte Bohrung ausgebildet, wobei die zylindrische Führungsfläche 48 in einer ersten Stufe 54 geführt ist, und die zylindrische Abdichtfläche 52 in einer zweiten Stufe 56 durch ein radial wirkendes Dichtelement 58 abgedichtet ist. Der Durchmesser der ersten Stufe ist hierbei größer als der Durchmesser der zweiten Stufe. Bei dem gezeigten Abdichtelement 58 handelt es sich z.B. um einen O-Ring der in eine Ringnut in der zweiten Stufe 56 eingebaut ist. Es ist in diesem Zusammenhang auch darauf hinzuweisen, daß die Abdichtfläche 52 zum Ende hin in eine konisch abgeschrägte Fläche 60 übergeht, um das Einschieben des Einsatzteils in das Abdichtelement 58 zu erleichtern, sowie letzteres bei der Montage des Einsatzteils 20 vor Beschädigungen zu schützen. Man bemerke ebenfalls, daß das Einführen der abgeschrägten Spitze des Einsatzteils 20 in das Abdichtelement 58 durch die zylindrische Führung der Führungsfläche 48 in der ersten Bohrstufe 54 erleichtert wird.

Das Einsatzteil 20 wird vorteilhaft durch Schrauben 62, 64 in der Kammer 22 festgehalten. Diese Schrauben 62, 64 sind in entsprechende Gewindebohrungen der Kammerwand 66 eingeschraubt. Sie liegen sich vorteilhaft diametral gegenüber und ragen quer zur Mittelachse 68 des Anschlußstutzens 10 in die Kammer 22 hinein. Hier wirken sie mit der abgeschrägten Mantelfläche 50 des Einsatzteils 20 zusammen, um das Einsatzteil 20, durch die Keilwirkung der abgeschrägten Mantelfläche 50, in Richtung der Kammeröffnung zu blockieren, ohne hierbei seine Bewegungsfreiheit in Richtung der Kammer-Dichtfläche 38 zu beeinträchtigen.

Die Ausführung nach Figur 4 unterscheidet sich von der Ausführung der Figur 3 ausschließlich dadurch, daß in das Einsatzteil 20', anstelle des einfachen Durchgangskanal 24, ein Durchflußbegrenzer 70 integriert ist. Bei einem Flaschenventil wird zum Befüllen der Flasche das Einsatzteil 20', nach dem Loslösen der Schrauben 62, 64, einfach aus der Kammer 22 entnommen.

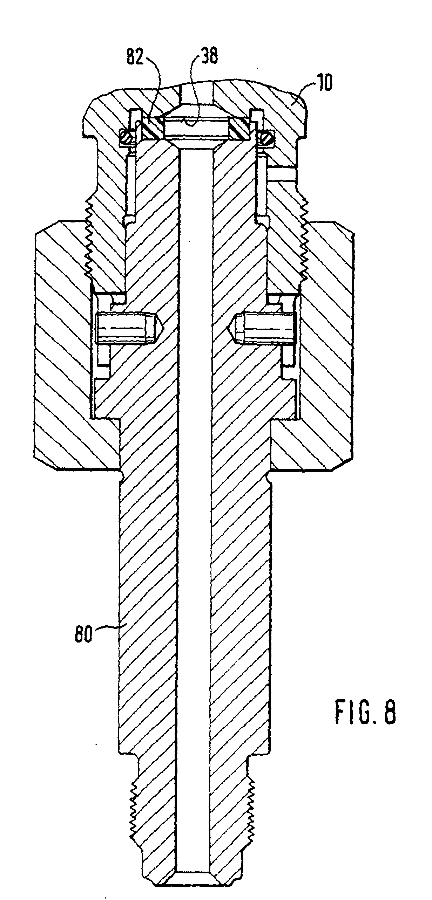

In Figur 8 ist ein Ventilanschlußstutzen 10 eines Flaschenventils, mit einem angekuppelten Füllnippel 80 zum Befüllen der Flasche gezeigt. Man beachte, daß das Einsatzteil 20, 20' vor dem Anschluß des Füllnippels aus der Kammer 22 genommen wurde. Die Abdichtung zwischen Anschlußstutzen 10 und Füllnippel 80 erfolgt vorteilhaft mittels eines axialen Dichtrings 82 aus Kunststoff, welcher unmittelbar an die Kammer-Dichtfläche 38 angepreßt wird. Hierdurch wird eine Beschädigung des Dichtwulstes 16 beim befüllen der Flasche vermieden. Nach dem Befüllen der Flasche kann entweder das alte Einsatzteil 20, 20' oder ein neues Einsatzteil 20, 20' in die Kammer 22 eingesetzt werden. Falls erforderlich, kann vor dem Einsetzen des Einsatzteils 20, 20', die Dichtfläche 38 nachbearbeitet werden. Da es sich hierbei um eine ebene Dichtfläche handelt, ist dieses Nacharbeiten mit geringem Aufwand möglich.

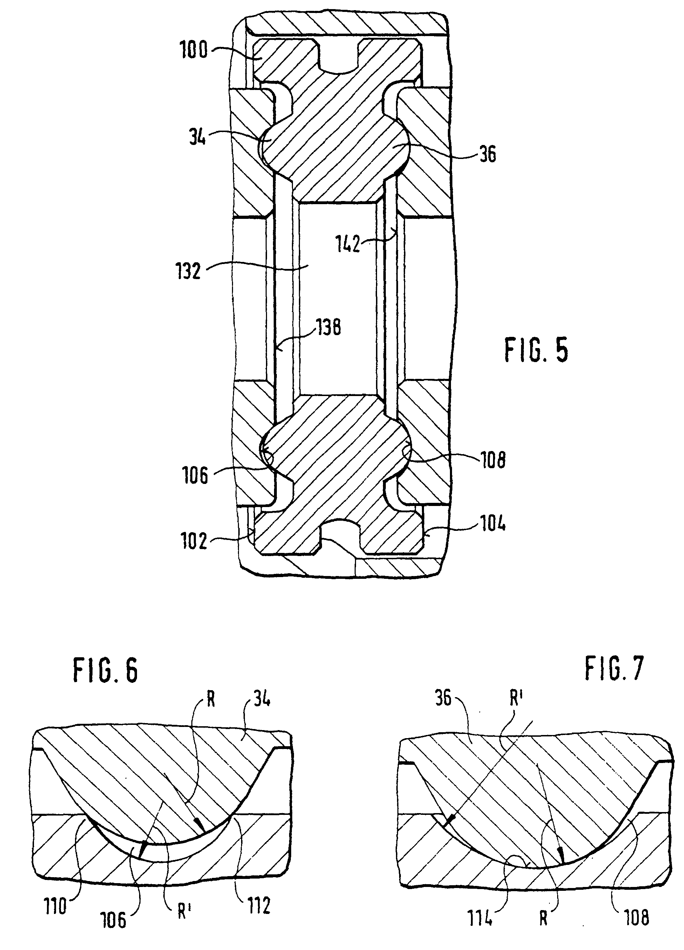

Anhand der Figuren 5 bis 7 wird eine Weiterentwicklung des Dichtrings 32 und der Dichtflächen 38, 42 der Figur 3 beschrieben.

Der Dichtring 132 unterscheidet sich von dem Dichtring 32 insbesondere durch einen äußeren Schutzrand 100, der jeden der beiden Dichtwülste 34, 36 überragt. (In anderen Worten, der Dichtring weist in seinem Randbereich eine größere Dicke als im Bereich der Dichtwülste 34, 36 auf.) Die Stirnflächen 102, 104 dieses Schutzrands 100 dienen als Auflageflächen bis zum Einbau des Dichtrings 132, und verhindern, daß die Dichtwülste 36, 34 beim Niederlegen des Dichtrings 132 auf eine flache Fläche z.B. zerkratzt werden.

Die Dichtflächen 138, 142 unterscheiden sich von den Dichtflächen 38, 42 durch eine Ringnut 106, bzw. 108 in den jeweiligen Dichtflächen. Diese Ringnut 106, 108 zentriert jeweils den Dichtring 32 oder 132 auf der Dichtfläche 106, 108. Hierdurch wird erreicht, daß der Eindruck des Dichtwulstes in der Dichtfläche 138, 142 stets genau an der gleichen Stelle lokalisiert ist. In der Ausführung nach Figur 6 ist der Radius R' der abgerundeten Ringnut 106 kleiner als der Radius R des abgerundeten Dichtwulstes 34. Der Dichtwulst 34 liegt stets an den Kanten 110, 112 der Ringnut 106 an. In der Ausführung nach Figur 7 ist der Radius R' der abgerundeten Ringnut 108 größer als der Radius R des abgerundeten Dichtwulstes 36. Der Dichtwulst 34 liegt stets an der Grundfläche 114 der Ringnut 108 an.

Es bleibt abschließend anzumerken, daß der Dichtring 32, bzw. der Dichtring 132, insbesondere in Kombination mit den Dichtflächen nach den Figuren 6 und 7, auch ohne Einsatzteil 20, d.h. unmittelbar zwischen Anschlußstutzen und Anschlußnippel einsetzbar ist. Im Vergleich zu den "Outlet Connections for Ultra High Integrity Service, CGA 630/710 series" der "Compressed Gas Association, Inc." hätte ein solches System den Vorteil, daß die Dichtflächen weniger exponiert sind und auch ohne Problem nachbearbeitet werden können. Letzteres trifft auch dann zu, falls die Dichtflächen, wie in den Figuren 6 und 7 gezeigt, Ringnuten aufweisen.

## Patentansprüche

1. Anschlußstutzen (10) umfassend eine erste ringförmige Dichtfläche mit einem umlaufenden Dichtwulst (16), wobei dieser Dichtwulst (16), beim Ankuppeln eines Anschlußnippels (12) an den Anschlußstutzen, in eine ihm gegenüberliegende Stirnfläche eines metallischen Dichtrings (14) einpreßbar ist;
**gekennzeichnet durch,**
ein auswechselbares Einsatzteil (20) das in eine stirnseitig offene Kammer (22) im Anschlußstutzen (10) abgedichtet eingesetzt ist und in dieser Kammer (22) die erste ringförmige Dichtfläche mit dem Dichtwulst (16) ausbildet.

2. Anschlußstutzen nach Anspruch 1, **gekennzeichnet durch**
einen axialen Dichtring (32), der mit seiner ersten Stirnfläche an einer ringförmigen Kammer-Dichtfläche (38) in der Kammer (22) und mit seiner zweiten Stirnfläche an einer zweiten ringförmigen Dichtfläche (42) am Einsatzteil (20) anliegt, wobei mindestens die erste Stirnfläche des Dichtrings einen Dichtwulst (34) ausbildet.

3. Anschlußstutzen nach Anspruch 2, **dadurch gekennzeichnet,**
**daß** die zweite Stirnfläche des Dichtrings (32) einen zweiten Dichtwulst (36) ausbildet.

4. Anschlußstutzen nach Anspruch 2 oder 3, **dadurch gekennzeichnet, daß** der Dichtring (32) in eine stirnseitig offene Dichtringkammer (30) im Einsatzteil (20) eingesetzt ist, wobei diese Dichtringkammer (30) derart ausgelegt ist, daß der erste Dichtwulst (34) des Dichtrings (32) nicht aus der Dichtringkammer (30) herausragt.

5. Anschlußstutzen nach Anspruch 4, **dadurch gekennzeichnet, daß** die Kammer-Dichtfläche (38) von einer Ringnut (44) umgeben wird, in welche die Wandung (46) der Dichtringkammer (30) eingeführt ist.

6. Anschlußstutzen nach einem der Ansprüche 1 bis 5, **gekennzeichnet durch** ein radial wirkendes Abdichtelement (58) zwischen einer rotationssymmetrischen Mantelfläche in der Kammer (22) und einer rotationssymmetrischen Mantelfläche (52) am Einsatzteil (20).

7. Anschlußstutzen nach Anspruch 6, **gekennzeichnet durch**, einen O-Ring (58) der in eine Ringnut in der Kammer (22) des Anschlußstutzens (10) derart eingebaut ist, daß er abgedichtet an einer zylindrischen Mantelfläche (52) des Einsatzteils (20) anliegt.

8. Anschlußstutzen nach einem der Ansprüche 1 bis 7, **gekennzeichnet durch** mindestens eine Schraube (62, 64), welche das Einsatzteil (20) in der Kammer (22) befestigt, wobei diese Schraube (62, 64) in die Kammerwand (66) eingeschraubt ist und quer zur Mittelachse (68) des Anschlußstutzens (10) in die Kammer (22) hineinragt, wo sie mit einer abgeschrägten Mantelfläche (50) des Einsatzteils (20) derart zusammenwirkt, daß das Einsatzteil (20), **durch** die Keilwirkung der abgeschrägten Mantelfläche (50), in Richtung der Kammeröffnung blockiert wird, in Richtung der Kammer-Dichtfläche (38) jedoch frei beweglich ist.

9. Anschlußstutzen nach einem der Ansprüche 1 bis 8, **dadurch gekennzeichnet, daß**
das Einsatzteil (20), in Reihenfolge von seinem Ende mit dem ersten Dichtwulst (16) bis zu seinem gegenüberliegen Ende, eine erste zylindrische Führungsfläche (48), eine konisch sich erweiternde Einspannfläche (50), und eine zylindrische Abdichtfläche (52) aufweist,
wobei die Kammer (22) als abgestufte Bohrung ausgebildet ist, und die zylindrische Führungsfläche (48) in einer ersten Stufe (54) geführt ist, und die zylindrische Abdichtfläche (52) in einer zweiten Stufe (56) durch ein radial wirkendes Dichtelement (58) abgedichtet ist, und wobei der Durchmesser der ersten Stufe (54) größer als der Durchmesser der zweiten Stufe (56) ist.

10. Anschlußstutzen nach einem der Ansprüche 1 bis 9, **gekennzeichnet durch**
einen Durchflußbegrenzer (70) der in das Einsatzteil (20') integriert ist.

11. Anschlußstutzen nach einem der Ansprüche 1 bis 10, **gekennzeichnet durch** einen axialen Dichtring (32, 132), der mit seiner ersten Stirnfläche an einer ringförmigen ersten Dichtfläche (38, 138) und mit seiner zweiten Stirnfläche an einer ringförmigen zweiten Dichtfläche (42, 142) anliegt,
wobei die beiden Stirnflächen des Dichtrings (32, 132) jeweils einen Dichtwulst (34, 36) ausbilden.

12. Anschlußstutzen nach Anspruch 11, **dadurch gekennzeichnet, daß** mindestens eine der beiden Dichtflächen (132, 138) eine Ringnut (106, 108) zum Zentrieren des Dichtrings (132) auf der Dichtfläche aufweist.

13. Anschlußstutzen nach Anspruch 11, **dadurch gekennzeichnet, daß** der Dichtwulst (36) unten in der Ringnut (108) aufliegt.

14. Anschlußstutzen nach Anspruch 11, **dadurch gekennzeichnet, daß** der Dichtwulst (34) an den Kanten (110, 112) der Ringnut (106) aufliegt.

15. Anschlußstutzen nach einem der Ansprüche 10 bis 14, **dadurch gekennzeichnet, daß** der Dichtring (132) einen Schutzrand (100) aufweist der über die Dichtwülste hervorragt.

## Claims

1. Connection piece (10) comprising a first annular sealing face with an surrounding sealing bead (16), wherein this sealing bead (16) can be pressed into an opposite end face of a metal sealing ring (14) during coupling of a connection nipple (12) to the connection piece,
**characterised by**
an interchangeable insert (20), which is inserted in a sealed manner into a chamber (22) opening in an end face of the connection piece (10) and
forms said first annular sealing face with the sealing bead (16) in this chamber (22).

2. Connection piece according to claim 1, **characterised by**
an axial sealing ring (32), which rests with its first end face against an annular chamber sealing face (38) in the chamber (22) and with its second end face against a second annular sealing face (42) on the insert (20), at least the first end face of the sealing ring forming a sealing bead (34).

3. Connection piece according to claim 2, **characterised in that**
the second end face of the sealing ring (32) forms a second sealing bead (36).

4. Connection piece according to claim 2 or 3, **characterised in that** the sealing ring (32) is introduced into a sealing ring chamber (30) opening in an end face of the insert (20), this sealing ring chamber (30) being designed in such a way that the first sealing bead (34) of the sealing ring (32) does not project from the sealing ring chamber (30).

5. Connection piece according to claim 4, **characterised in that** the chamber sealing face (38) is enclosed by an annular groove (44), into which the wall (46) of the sealing ring chamber (30) is introduced.

6. Connection piece according to one of claims 1 to 5, **characterised by** a radially acting sealing element (58) between a rotation-symmetrical surface in the chamber (22) and a rotation-symmetrical surface (52) on the insert (20).

7. Connection piece according to claim 6, **characterised by** an O-ring (58), which is fitted in an annular groove in the chamber (22) of the connection piece (10) in such a way that it is sealed against a cylindrical surface (52) of the insert (20).

8. Connection piece according to one of claims 1 to 7, **characterised by** at least one screw (62, 64), which secures the insert (20) in the chamber (22), this screw (62, 64) being screwed into the chamber wall (66) and projecting at right angles to the central axis (68) of the connection piece (10) into the chamber (22), where it interacts with a bevelled surface (50) of the insert (20) in such a way that the insert (20) is blocked in the direction of the chamber opening by the wedge effect of the bevelled surface (50), but is freely movable in the direction of the chamber sealing face (38).

9. Connection piece according to one of claims 1 to 8, **characterised in that**
the insert (20) has a first cylindrical guide surface (48), a tapered clamping surface (50) and a cylindrical sealing face (52), arranged in this order from its end with the first sealing bead (16) to its opposite end, the chamber (22) being designed as a stepped bore and the cylindrical guide surface (48) guided in a first step (54) and the cylindrical sealing face (52) sealed in a second step (56) by a radially acting sealing element (58) and the diameter of the first step (54) being greater than that of the second step (56).

10. Connection piece according to one of claims 1 to 9, **characterised by** a flow limiter (70), which is integrated in the insert (20').

11. Connection piece according to one of claims 1 to 10, **characterised by** an axial sealing ring (32, 132), which rests with its first end face against an annular first sealing face (38, 138) and with its second end face against an annular second sealing face (42, 142), the two end faces of the sealing ring (32, 132) each forming a sealing bead (34, 36).

12. Connection piece according to claim 11, **characterised in that** at least one of the two sealing faces (132, 138) has an annular groove (106, 108) for centering the sealing ring (132) on the sealing face.

13. Connection piece according to claim 11, **characterised in that** the sealing bead (36) rests at the bottom in the annular groove (108).

14. Connection piece according to claim 11, **characterised in that** the sealing bead (34) rests on the edges (110, 112) of the annular groove (106).

15. Connection piece according to one of claims 10 to 14, **characterised in that** the sealing ring (132) has a protective edge (100), which projects beyond the sealing beads.

## Revendications

1. Tubulure de raccordement (10) comprenant une première surface d'étanchéité annulaire entourée d'un bourrelet d'étanchéité (16) pouvant être pressé, lors de l'accouplement d'un nipple de raccordement (12) à la tubulure de raccordement, dans une surface frontale opposée d'une bague d'étanchéité métallique (14),
**caractérisée par**
une pièce intercalaire (20) remplaçable montée de façon étanche dans un logement (22) ouvert sur le côté frontal de la tubulure de raccordement (10), ladite pièce intercalaire (20) formant ladite première surface d'étanchéité annulaire à bourrelet d'étanchéité (16) dans ledit logement (22).

2. Tubulure de raccordement selon la revendication 1, **caractérisée par** une bague d'étanchéité axiale (32) dont la première surface frontale se trouve contre une surface d'étanchéité annulaire (38) du logement dans le logement (22) et la seconde surface frontale, contre une seconde surface d'étanchéité annulaire (42) de la pièce intercalaire (20), au moins ladite première surface frontale de la bague d'étanchéité présentant un bourrelet d'étanchéité (34).

3. Tubulure de raccordement selon la revendication 2, **caractérisée en ce que** la seconde surface frontale de la bague d'étanchéité (32) développe un second bourrelet d'étanchéité (36).

4. Tubulure de raccordement selon la revendication 2 ou 3, **caractérisée en ce que** la bague d'étanchéité (32) est insérée dans un logement (30) de bague d'étanchéité de la pièce intercalaire (20), ouvert sur le côté frontal, ledit logement (30) de bague d'étanchéité étant conçu de manière que le premier bourrelet d'étanchéité (34) de la bague d'étanchéité (32) ne ressort pas du logement (30) de bague d'étanchéité.

5. Tubulure de raccordement selon la revendication 4, **caractérisée en ce que** la surface d'étanchéité (38) du logement est entourée d'une rainure annulaire (44) dans laquelle est introduite la paroi (46) du logement (30) de bague d'étanchéité.

6. Tubulure de raccordement selon l'une des revendications 1 à 6, **caractérisée par** un élément d'étanchéité (58) à action radiale placé entre une surface enveloppante à symétrie de révolution dans le logement (22) et une surface enveloppante (52) à symétrie de révolution de la pièce intercalaire (20).

7. Tubulure de raccordement selon la revendication 6, **caractérisée par** un joint torique (58) inséré de manière telle dans une rainure annulaire du logement (22) de la tubulure de raccordement (10) qu'il s'appuie de façon étanche contre une surface enveloppante cylindrique (52) de la pièce intercalaire (20).

8. Tubulure de raccordement selon l'une des revendications 1 à 7, **caractérisée en ce qu'**une vis (62, 64) au moins fixe la pièce intercalaire (20) dans le logement (22), ladite vis (62, 64) étant vissée dans la paroi (66) du logement et ressortant, transversalement par rapport à l'axe médian (68) de la tubulure de raccordement (10), dans le logement (22) dans lequel elle agit conjointement avec une surface enveloppante biseautée (50) de la pièce intercalaire (20) de manière telle que la pièce intercalaire (20), du fait que la surface enveloppante biseautée (50) agit comme un coin, est bloquée en direction de l'ouverture du logement tout en ayant toute liberté de mouvement en direction de la surface d'étanchéité (38) du logement.

9. Tubulure de raccordement selon l'une des revendications 1 à 8, **caractérisée en ce que** la pièce intercalaire (20) présente, de son extrémité présentant le premier bourrelet d'étanchéité (16) à son extrémité opposée, une première surface de guidage cylindrique, (48) une surface conique de serrage (50) qui va en s'élargissant et une surface d'étanchéité cylindrique (52), le logement (22) étant réalisé comme perçage étagé, la surface de guidage cylindrique (48) étant réalisée dans un premier étage (54), la surface d'étanchéité cylindrique (52) étant étanchéifiée, dans un second étage (56), par un élément d'étanchéité (58) à action radiale et le diamètre du premier étage (54) étant supérieur au diamètre du second étage (56).

10. Tubulure de raccordement selon l'une des revendications 1 à 9, **caractérisée par** un limiteur de débit (70) intégré dans la pièce intercalaire (20').

11. Tubulure de raccordement selon l'une des revendications 1 à 10, **caractérisée par** une bague d'étanchéité axiale (32, 132) dont la première surface frontale se trouve contre une première surface d'étanchéité annulaire (38, 138) et la seconde surface frontale, contre une seconde surface d'étanchéité annulaire (42, 142), les deux surfaces frontales de la bague d'étanchéité (32, 132) développant chacune un bourrelet d'étanchéité (34, 36).

12. Tubulure de raccordement selon la revendication 11, **caractérisée en ce qu'**au moins l'une des deux surfaces d'étanchéité (132, 138) présente une rainure annulaire (106, 108) servant au centrage de la bague d'étanchéité (132) sur la surface d'étanchéité.

13. Tubulure de raccordement selon la revendication 11, **caractérisée en ce que** le bourrelet d'étanchéité (36) est placé sur le fond de la rainure annulaire (108).

14. Tubulure de raccordement selon la revendication 11, **caractérisée en ce que** le bourrelet d'étanchéité (34) est placé contre les arêtes (110, 112) de la rainure annulaire (106).

15. Tubulure de raccordement selon l'une des revendications 10 à 14, **caractérisée en ce que** la bague d'étanchéité (132) présente un bord de protection (100) dépassant les bourrelets d'étanchéité.
